# FASCICULE DE BREVET EUROPEEN

(11) **EP 2 786 071 B1**
(45) Date de publication et mention de la délivrance du brevet: **24.07.2019**
(21) Numéro de dépôt: 12799235.2
(22) Date de dépôt: 29.10.2012
(51) Int. Cl.: F23C 10/01, F23C 10/10, F23C 10/24, F23C 10/28

(54) **PROCÉDÉ DE COMBUSTION EN BOUCLE CHIMIQUE AVEC ELIMINATION DES CENDRES ET FINES EN SORTIE DE LA ZONE DOXYDATION ET INSTALLATION UTILISANT UN TEL PROCEDE**
CHEMICAL-LOOPING-COMBUSTION MIT ENTFERNUNG VON ASCHE UND FEINSTOFFEN AUS DEM OXIDATIONSBEREICH UND ANLAGE ZUR DURCHFÜHRUNG DES VERFAHRENS
CHEMICAL LOOPING COMBUSTION METHOD WITH THE REMOVAL OF ASH AND FINES LEAVING THE OXIDATION ZONE, AND FACILITY USING SUCH A METHOD

(30) Priorité: 02.12.2011 FR 1103697
(43) Date de publication de la demande: 08.10.2014
(73) Titulaire: IFP Energies nouvelles, 92500 Rueil-Malmaison (FR); Total S.A., 92400 Courbevoie (FR)
(72) Inventeur: GUILLOU, Florent, F-69360 Ternay (FR); GAUTHIER, Thierry, F-69530 Brignais (FR); HOTEIT, Ali, F-75012 Paris (FR); RIFFLART, Sébastien, F-75012 Paris (FR)
(74) Mandataire: IFP Energies nouvelles
(86) Numéro de dépôt international: PCT/FR2012/000441
(87) Numéro de publication internationale: WO 2013/079818

(56) Documents cités:
- EP-A1- 2 273 192
- WO-A2-2010/052415
- FR-A1- 2 556 983
- FR-A1- 2 850 156
- JP-A- 1 079 504
- US-A1- 2011 120 560

## Description

### Domaine de l'invention

Le domaine de l'invention est celui de la combustion en boucle chimique d'oxydoréduction de charges hydrocarbonées solides, pour produire de l'énergie, du gaz de synthèse et/ou de l'hydrogène.

Plus particulièrement, l'invention concerne l'élimination des cendres et fines produites dans l'installation de combustion en boucle chimique.

### Terminologie

Procédé de Chemical Looping Combustion ou CLC : Dans la suite du texte, on entend par procédé CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Dans une installation de combustion en boucle chimique, la zone d'oxydation est celle dans laquelle la masse oxydo-réductrice est oxydée et la zone de réduction est celle dans laquelle la masse oxydo-réductrice est réduite.

### Dévolatilisation :

Au cours d'un traitement thermique, les composés organiques perdent des matières volatiles, d'abord de l'eau et du dioxyde de carbone, des hydrocarbures liquides puis gazeux, ensuite de l'oxyde de carbone et enfin de l'hydrogène. Ce processus s'appelle la dévolatilisation. La température de dévolatilisation et l'amplitude du phénomène dépendent du composé organique de départ. Ainsi, pour des charbons de rang croissant, la dévolatilisation se produit à température de plus en plus élevée.

### Lit fluidisé :

Dans la suite de la description :
- par lit fluidisé dense, on entend un lit fluidisé dans lequel la fraction de gaz ε_{g} est inférieure à 0,9, de préférence inférieure à 0,8.
- par lit fluidisé dilué, on entend un lit fluidisé dans lequel la fraction volumique des particules d'oxydes métalliques est inférieure à 10% en volume.

Riser : dans la suite de la description, on désignera par "riser" une enceinte verticale de forme tubulaire dans laquelle les fluides sont soumis à un mouvement ascendant.

### Art antérieur

### Problématique des cendres

Pour effectuer la combustion en boucle chimique, on utilise des matériaux transporteurs d'oxygène, tels que les oxydes métalliques qui cèdent leur oxygène dans une zone de réduction (appelée « Réacteur Fuel ») dans les conditions opératoires appropriées. Une fois réduit, le matériau est ensuite transporté vers une zone d'oxydation (appelée « Réacteur Air ») dans laquelle il est réoxydé au contact d'un gaz oxydant (tel que par exemple l'air ou la vapeur d'eau).

Plus généralement, un procédé de combustion en boucle chimique comprend une ou plusieurs zones réactionnelles constituant une zone de réduction, dans lesquelles on effectue la combustion d'un combustible (par exemple une charge hydrocarbonée) par mise en contact avec un solide transporteur d'oxygène qui est ensuite réoxydé dans au moins une zone d'oxydation par mise en contact avec de l'air ou de la vapeur d'eau avant d'être renvoyé vers la ou le(s) zone(s) de combustion (ou réduction). Les zones réactionnelles permettant la mise en oeuvre des réactions de combustion en boucle chimique sont généralement constituées de lits fluidisés ou de lits transportés.

La combustion en boucle chimique (CLC) des charges hydrocarbonées solides est un procédé permettant notamment la production d'énergie (vapeur, électricité...) par récupération de la chaleur dégagée par les réactions de combustion, tout en produisant des fumées riches en CO2. Il est donc possible d'envisager le captage du CO₂ après condensation des fumées et compression des fumées. Il est également possible d'envisager la production de gaz de synthèse, voire d'hydrogène, en contrôlant la combustion et en mettant en oeuvre les purifications requises en aval du procédé de combustion.

Dans les mécanismes réactionnels associés à la combustion en boucle chimique dans la zone de réduction, il est établi que le combustible solide passe par une phase de gazéification, favorisée par la présence de vapeur d'eau ou de dioxyde de carbone et la température, puis que le gaz produit par l'étape de gazéification s'oxyde au contact du matériau transporteur d'oxygène. Si le combustible solide contient des matières volatiles, alors celles-ci se dévolatilisent au moins partiellement au contact du matériau transporteur d'oxygène chaud et sont ensuite oxydées par celui-ci. Il est également possible, dans le cas où le matériau transporteur d'oxygène relargue naturellement l'oxygène en fonction des conditions opératoires, d'avoir une oxydation directe du combustible solide par l'oxygène gazeux relargué par le matériau dans le Réacteur Fuel.

La combustion en boucle chimique des charges solides nécessite des conditions opératoires sévères et contraignantes pour pouvoir réaliser les réactions de combustion. Afin de favoriser la gazéification du combustible, il est nécessaire de se placer à des températures élevées, généralement comprises entre 800 et 1100°C, préférentiellement comprises entre 850 et 1000°C. Le temps requis pour effectuer la gazéification diminue en fonction de la température et est généralement compris entre 30 secondes et 30 minutes. De ce fait, il peut être avantageux d'effectuer une gazéification partielle, de séparer des effluents le résidu combustible non gazéifié et de le recycler. Ainsi, il est possible d'atteindre des taux de conversion (par gazéification) par passe compris entre 50 et 80% dans un domaine de températures comprises entre 850°C et 1000°C avec des temps de réaction compris entre 1 minute et 10 minutes, typiquement compris entre 3 et 5 minutes. En augmentant la pression partielle en gaz oxydant (H₂0, CO₂), il est possible de réduire les temps de gazéification.

Une autre difficulté associée à la mise en oeuvre de la combustion en boucle chimique des charges solides concerne la formation de cendres. En effet, les combustibles solides ont des teneurs en matières minérales non négligeables et une fois la combustion du carbone et de l'hydrogène effectuée, des résidus solides appelés cendres se forment. Le tableau 1 rassemble les analyses de deux charbons A et B à titre d'exemple. On constate que la teneur en cendres des charbons varie selon l'origine de la charge solide, mais que cette teneur est non négligeable. Elle représente typiquement de 5 à 20% de la masse de charbon sec. Certains combustibles solides tel le pet coke contiennent des teneurs en cendres beaucoup plus faibles. Il existe également des combustibles solides plus chargés en cendres.

Ces cendres sont essentiellement constituées d'oxyde de silicium et d'aluminium, mais elles contiennent également d'autres composants, comme illustré à titre d'exemple dans le tableau 1.

**Tableau 1 : Analyse de différents charbons**

| | | **-** | **Charbon A** | **Charbon B** |
|---|---|---|---|---|
| **Analyse charbon Sec** | Cendres | % pds | 10,3 | 14,8 |
| | matières volatiles | % pds | 37,6 | 24 |
| | Soufre | % pds | 0,5 | 0,57 |
| | chaleur spécifique | Kcal/kg | 6710 | 6630 |
| | | | | |
| **Analyse ultime** | C | % pds | 71,1 | 73,46 |
| | H | % pds | 4,77 | 3,87 |
| | N | % pds | 1,41 | 1,65 |
| | S | % pds | 0,5 | 0,57 |
| | Cendres | % pds | 10,3 | 14,76 |
| | O (par différence) | % pds | 11,92 | 5,69 |
| | | | | |
| **Composition des cendres** | SiO2 | % pds | 67 | 49,84 |
| | Al2O3 | % pds | 19,2 | 40,78 |
| | Fe2O3 | % pds | 5,2 | 2,9 |
| | CaO | % pds | 2 | 1,08 |
| | MgO | % pds | 1,2 | 0,26 |
| | TiO2 | % pds | 0,9 | 1,96 |
| | K2O | % pds | 1,7 | 0,64 |
| | Na2O | % pds | 1,7 | 0,06 |
| | SO3 | %pds | 0,9 | 0,52 |
| | P2O5 | % pds | 0,2 | 1,05 |

Les cendres résultant de la combustion du charbon sont constituées de fines particules résiduelles. Leur température de fusion varie en fonction de leur composition et est généralement comprise entre 1000 et 1500°C. Cependant, à des températures inférieures, par exemple entre 800 et 1000°C, il est possible d'observer un phénomène d'agglomération des particules de cendres qui deviennent collantes. Elles peuvent donc soit s'agglomérer entre elles, soit s'agglomérer avec les particules de matériau transporteur d'oxygène. Compte tenu des conditions de mise en oeuvre dans la combustion en boucle chimique, on distingue alors deux types de cendres:
∘ les cendres volantes: correspondent aux cendres qui sont transportées dans le Réacteur Fuel par les gaz de combustion ;
∘ les cendres agglomérées: correspondent aux cendres qui s'agglomèrent entre elles ou avec le matériau transporteur d'oxygène et qui sont trop lourdes pour être transportées dans le Réacteur Fuel par les gaz de combustion.

Les cendres volantes représentent en général de 50 à 99% des cendres formées, typiquement de 70 à 90%. Leur granulométrie est relativement fine avec en général au moins 25% de fines de taille inférieure à 10 microns et 90% de fines de taille inférieure à 100 microns. Le diamètre de Sauter moyen représentatif de la granulométrie des cendres volantes est en général compris entre 5 et 30 microns, typiquement voisin de 10 microns. La masse volumique de grain de ces cendres est en général comprise entre 2000 et 3000 kg/m3, généralement voisine de 2500 kg/m3.

La granulométrie des cendres agglomérées est plus délicate à estimer et dépend des conditions de mise en oeuvre du procédé. De manière générale, on estime que ces cendres ont une granulométrie supérieure à 100 microns et leur taille peut aller jusqu'à plusieurs millimètres.

La demande de brevet FR 2 850 156 décrit un procédé de combustion en boucle chimique pour lequel le combustible solide est broyé avant l'entrée dans le réacteur de réduction fonctionnant en lit fluidisé circulant, afin de permettre une combustion plus complète et plus rapide. Le procédé produit presque 100% de cendres volantes qui sont séparées des oxydes en circulation. La séparation en aval du lit circulant est d'abord assurée par un cyclone puis par un dispositif comprenant un lit fluidisé par de la vapeur d'eau permettant de séparer les particules d'imbrûlés des particules d'oxyde métallique. L'entraînement d'imbrûlés dans la zone d'oxydation et donc les émissions de CO₂ dans les effluents du réacteur d'oxydation est donc ainsi évité. Les cendres volantes sont séparées des particules d'oxydes dans un second circuit comprenant un séparateur fonctionnant en lit fluidisé.

Dans la thèse de N. Berguerand "Design and Operation of a 10 kWth Chemical-Looping Combustor for Solid Fuels", ISBN 978-91-7385-329-3, est décrit un dispositif qui permet d'effectuer la combustion de charbon en mettant en oeuvre une boucle chimique.

Ce dispositif est composé d'un réacteur d'oxydation mettant en oeuvre des particules métalliques, d'un cyclone permettant la séparation des particules et de l'air appauvri après oxydation, d'un lit fluidisé alimenté en oxydes métalliques oxydés par la jambe de retour située sous le cyclone, dans lequel s'effectue la réduction de l'oxyde métallique par combustion du charbon. Le charbon est alimenté dans la partie supérieure du lit fluidisé, dans la phase diluée. Dans le réacteur de réduction, la combustion du charbon s'effectue progressivement : les particules de charbon commencent par descendre et se dévolatilisent dans la phase diluée, à contre-courant des gaz de fluidisation, et dans laquelle les oxydes métalliques ne sont présents qu'en faible quantité; puis elles rentrent en contact avec les oxydes métalliques fluidisés en phase dense. Le temps de séjour important permet de gazéifier le charbon et de produire des gaz de combustion contenant des quantités importantes de monoxyde de carbone et d'hydrogène qui passent dans la phase diluée.

Selon ce document, le réacteur de réduction est équipé d'un séparateur de particules intégré à la phase dense ce qui nécessite l'ajout de gaz additionnel pour réaliser la séparation. Dans ce système, il n'est pas prévu de dispositif spécifique permettant la séparation et l'évacuation des cendres formées pendant la combustion des charges solides.

Pour pallier les inconvénients des deux systèmes décrits précédemment, les demandeurs ont mis au point un procédé de combustion en boucle chimique , qui permet, même à partir de particules de combustible à l'état grossier, d'obtenir une combustion totale de la charge solide en minimisant la quantité de charge solide à recycler, ce qui permet de maximiser le rendement énergétique du procédé. Ce procédé de combustion selon l'invention permet de capter au moins 90% du CO₂ émis par la combustion dans les fumées directement à la sortie du réacteur de combustion, le taux de captage étant défini par le ratio entre la quantité de CO₂ émis dans les fumées issues du réacteur de combustion sur la quantité de CO₂ émis dans le procédé de combustion en boucle chimique.

En sortie du procédé de combustion, le ratio molaire CO/CO₂ des fumées en aval des cyclones est inférieur à 0,05 et le ratio H₂/H₂O est inférieur à 0,05. Ceci est réalisé d'une part grâce à l'optimisation du contact initial entre les particules transportant l'oxygène et le combustible solide pour favoriser les réactions de gazéification du charbon, et d'autre part, par l'optimisation du contact entre les produits de gazéification et les oxydes métalliques afin de produire des effluents ayant subi une combustion totale (H₂, CO et HC < 1% vol. dans les fumées).

Par ailleurs, la séparation des particules de combustible imbrûlé des particules d'oxydes métalliques est effectuée en amont de l'étape de dépoussiérage des fumées du réacteur de réduction pour utiliser au mieux l'énergie cinétique maximale des fumées pour la séparation des deux types de particules.

Le procédé en boucle chimique comprend au moins :
- une mise en contact des particules de charge solide en présence de particules d'oxydes métalliques dans une première zone de réaction opérant en lit fluidisé dense,
- une combustion des effluents gazeux issus de la première zone de réaction en présence de particules d'oxydes métalliques dans une seconde zone de réaction,
- une séparation au sein d'un mélange issu de la deuxième zone de réaction, du gaz, des particules d'imbrûlés, et des particules d'oxydes métalliques dans une zone de séparation
- une réoxydation des particules d'oxydes métalliques dans une zone d'oxydation avant de les renvoyer vers la première zone de réaction.

En aval de la zone de séparation des particules d'imbrûlés et des particules d'oxydes métalliques, un système de dépoussiérage comportant par exemple un ou plusieurs étages de cyclones peut être prévu pour séparer les particules entraînées dans les fumées de la zone de combustion du Réacteur Fuel. Les cendres volantes sont entraînées dans les fumées vers ce système de dépoussiérage avec les particules de combustible solide imbrûlées. Afin de maximiser le rendement énergétique de l'installation, il est nécessaire de récupérer l'essentiel des particules imbrûlées de combustible et donc d'effectuer un dépoussiérage poussé. Ce dépoussiérage permettra alors de récupérer les particules imbrûlées, mais également une partie importante des cendres volantes qui seront donc recyclées vers le Réacteur Fuel.

Afin d'éliminer les cendres, il est possible de positionner une enceinte comprenant un lit fluidisé sur la conduite canalisant les particules séparées pendant l'étape de dépoussiérage pour éliminer par élutriation les cendres volantes. Ce moyen ne permet cependant pas de contrôler séparément l'élutriation des cendres et l'élutriation des particules imbrûlées. En effet, dans ce cas, une bonne élimination des cendres produites peut se traduire consécutivement par une élimination importante de particules imbrûlées et donc une baisse du rendement énergétique ou une baisse du taux de captage de CO2. De plus, dans le cas où des particules du matériau transporteur d'oxygène sont entraînées vers la zone de dépoussiérage, il est nécessaire de dimensionner un lit fluidisé de grandes dimensions afin de laisser un temps suffisant à la séparation par élutriation dans le lit fluidisé.

Afin d'éliminer les cendres produites au niveau de la zone de réduction sans éliminer trop de particules de charge imbrûlée, le demandeur a mis au point une amélioration de ce procédé mettant en oeuvre une configuration particulière de la zone de réduction avec : une première zone de réaction opérant en lit fluidisé dense ; une seconde zone de réaction ; une zone de séparation rapide pour la séparation des particules de charge solide imbrûlées, de cendres volantes et des particules de matériau transporteur d'oxygène au sein d'un mélange issu de la seconde zone de réaction ; un dépoussiérage des fumées ; une zone de division du flux de particules, une partie des particules étant directement recyclée vers la première zone de réaction, l'autre envoyée vers une zone de séparation par élutriation pour récupérer les cendres et recycler les particules denses vers la première zone de réaction.

Cependant, des cendres peuvent également être transportées vers la zone d'oxydation. En effet, au cours de la combustion dans la zone de réduction, la dégradation de la charge produit des cendres de deux types : soit des cendres de foyer agglomérées qui ne sont pas transportées pneumatiquement avec le lit entraîné d'oxydes métalliques, soit des cendres volantes qui sont entraînées avec le lit de solide. Si les premières sont aisément éliminées en fond de réacteur en lit fluidisé par simple écoulement gravitaire, les secondes accompagnent l'oxyde et en l'absence de dispositif de contrôle de leur population dans le lit, elles vont s'y accumuler. On a donc transport des cendres de la zone de réduction vers la zone d'oxydation, et ce d'autant plus lorsqu'aucun dispositif de contrôle de population de cendres n'est implanté dans la zone de réduction.

Les conséquences de l'accumulation de cendres sont multiples, mais engendrent trois inconvénients principaux :
- la perturbation des écoulements de solide par modification de la granulométrie moyenne du lit pouvant entraîner des difficultés de contrôle de la circulation de ce même lit de solide
- la dilution de la fonction de transport d'oxygène des oxydes métalliques entraînant une baisse de performance du procédé.
- les risques d'agglomération entre cendres ou entre cendres et particules d'oxyde métallique sont accrus.

De manière alternative ou complémentaire à l'élimination des cendres et fines au niveau de la zone de réduction, il est proposé une nouvelle configuration de la zone d'oxydation (ou "réacteur air") qui permet d'utiliser l'énergie cinétique de l'air (gaz oxydant) disponible pendant la réoxydation du solide pour effectuer la séparation entre les particules de transporteur d'oxygène (oxyde métallique) et les particules que l'on souhaite éliminer : les cendres et les fines d'oxydes métalliques, puis pour effectuer la séparation des cendres dans une capacité placée sur une ligne de circulation de solide, mais dans une zone où les imbrûlés solides sont absents, à savoir en aval de R1 et en amont de (R0).

### Description de l'invention

Il est ainsi proposé une nouvelle configuration de la zone d'oxydation comprenant les éléments suivants:
- une zone réactive R1 (ou riser réactif) où se déroule la réaction d'oxydation des particules de matériau porteur d'oxygène qui est issu de la zone de réduction R0 de la boucle chimique de combustion ;
- une zone de séparation gaz-solide S2 permettant le dépoussiérage des fumées issues de la zone d'oxydation ;
- une zone de séparation par élutriation en phase dense S3 sous forme d'une capacité réacteur en lit fluidisé dense, complétée éventuellement d'une conduite de recyclage de solide porteur d'oxygène depuis la phase dense de la zone de séparation S3 vers le bas de la zone réactive R1, qui permet de faire circuler de nouveau l'oxyde dans la zone d'oxydation et de contrôler la population de cendres par une élutriation en lit dense.

### Résumé de l'invention

L'invention concerne un procédé de combustion d'une charge hydrocarbonée de particules solides en boucle chimique dans laquelle circule un matériau transporteur d'oxygène sous forme de particules, dans lequel :
- on met en contact des particules de charge hydrocarbonée avec les particules de matériau transporteur d'oxygène dans une zone de réduction R0 ;
- on met en contact les particules de matériau transporteur d'oxygène (1) issues de la zone de réduction R0 avec un flux de gaz oxydant (2) dans une zone réactive d'oxydation R1 ;
- on envoie la phase transportée (5) issue de la zone réactive R1 comprenant du gaz et du solide vers une zone de séparation gaz-solide S2 afin de séparer : une phase transportée majoritairement gazeuse (6) comprenant des cendres volantes et des fines de matériau transporteur d'oxygène, et un flux solide (7) comprenant la majeure partie des fines, des cendres volantes et la majeure partie des particules de matériau transporteur d'oxygène ;
- on envoie le flux solide (7) issu de la zone de séparation gaz-solide S2 vers une zone de séparation par élutriation en phase dense S3 fluidisée par un gaz non réducteur (8) permettant de séparer les fines et cendres volantes des particules de matériau transporteur d'oxygène afin d'envoyer un flux de particules (10) comprenant la majeure partie des particules de transporteur d'oxygène vers la zone de réduction R0, et évacuer par une conduite de sortie un effluent majoritairement gazeux (9) comprenant la majeure partie des cendres volantes et des fines de matériau transporteur d'oxygène.

Dans un mode de réalisation préféré, on fait circuler en boucle dans la zone réactive R1 les particules de transporteur d'oxygène au moyen d'une conduite (11) permettant le recyclage des particules de transporteur d'oxygène sédimentées dans la phase fluidisée dense depuis le fond de la zone de séparation S3 vers le bas de la zone réactive R1.

Avantageusement, on récupère de la chaleur au sein de la phase fluidisée dense constituée en fond de la zone de séparation par élutriation en phase dense S3 au moyen d'un échangeur de chaleur E4.

De manière préférée, la zone de séparation par élutriation en phase dense S3 est fluidisée avec une vitesse de fluidisation comprise entre 0,5 et 1 m/s.

De préférence, les particules de matériau transporteur d'oxygène comprennent initialement moins de 10% de particules de diamètre inférieur à 100 microns.

Dans un mode de réalisation préféré :
- on envoie l'effluent majoritairement gazeux (9) issu de la zone de séparation par élutriation en phase dense S3 vers une zone de dépoussiérage S5 pour évacuer un flux de gaz (13) contenant la majeure partie des cendres et des fines et un flux de particules (14) comprenant la majeure partie du matériau transporteur d'oxygène, ledit flux de particules étant envoyé par une conduite de transport vers la zone de réduction R0.

L'invention concerne également une installation selon l'objet de la revendication 7 pour réaliser la combustion d'une charge hydrocarbonée solide dans une boucle chimique d'oxydo-réduction selon le procédé décrit ci-dessus.

De préférence, l'installation comprend un échangeur de chaleur E4 au sein de la phase fluidisée dense constituée au bas de la zone de séparation en phase dense S3.

De préférence, l'installation comprend une conduite issue de la zone de séparation en phase dense S3 pour recycler vers la zone réactive R1 un flux de particules (11) comprenant une partie des particules solides séparées dans la zone de séparation par élutriation en phase dense S3 .

L'installation peut également comprendre une zone de dépoussiérage S5 en aval de la zone de séparation par élutriation en phase dense S3, munie d'une conduite d'admission pour recevoir un effluent majoritairement gazeux (9) issue de la zone de séparation S3, d'une conduite de sortie permettant d'évacuer un flux de gaz (13) contenant la majeure partie des cendres et des fines, et d'une conduite de transport vers la zone de réduction R0 d'un flux de particules (14) comprenant la majeure partie du matériau transporteur d'oxygène.

### Liste des figures

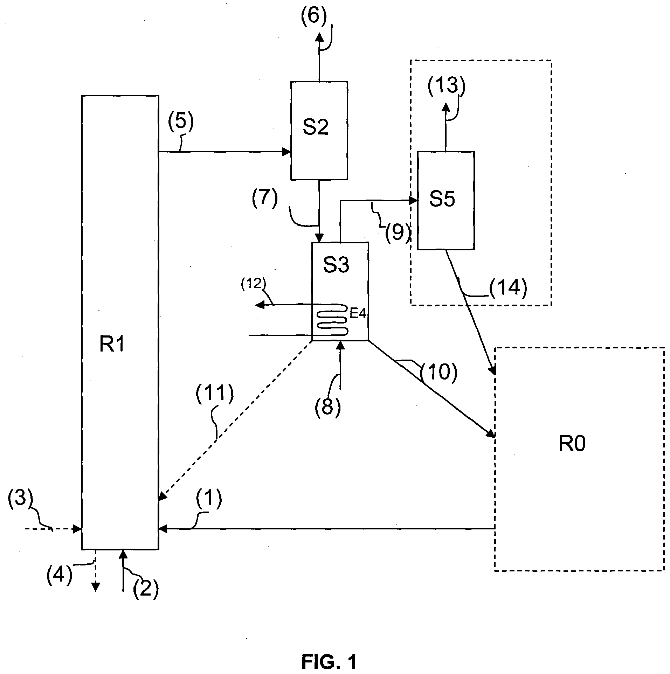

La figure 1 décrit l'invention à titre non limitatif.
La figure 1 représente le principe général du dispositif d'élimination des cendres en aval du réacteur d'oxydation selon l'invention.

L'invention peut être décrite généralement comme un ensemble tel que décrit sur la Figure 1.

Le dispositif permettant de mettre en oeuvre le procédé selon l'invention comprend notamment :
- une zone réactive R1 où se déroule la réaction d'oxydation du matériau porteur d'oxygène qui est issu de la zone de réduction R0 («Réacteur Fuel») de la boucle chimique de combustion ;
- une zone de séparation gaz-solide S2, de préférence sous forme d'un séparateur gaz solide de type cyclone, permettant le dépoussiérage des fumées issues de la zone réactive R1 ;
- une zone de séparation en phase dense S3 des populations de fines, de cendres volantes et de particules de porteur d'oxygène.

Ce dispositif est complété de manière facultative :
- d'un échangeur de chaleur E4 pour l'extraction de chaleur par un fluide caloporteur (12) ;
- d'une conduite de recyclage de solide porteur d'oxygène (11) depuis la phase dense de la zone de séparation S3 vers la base de la zone réactive R1 ;
- d'une zone de dépoussiérage des fumées S5 permettant d'effectuer une séparation poussée des fines et des cendres volantes et des particules de matériau transporteur d'oxygène, en sortie de la zone de séparation en phase dense S3, afin de rejeter un flux gazeux riche en cendres volantes et fines et de recycler un flux de particules de matériau transporteur d'oxygène vers la zone de réduction R0.

### Description de la figure 1.

Le matériau transporteur d'oxygène (MTO) est à l'état partiellement réduit après réaction avec une source de carbone qu'il aura contribué pour tout ou partie à oxyder au sein d'un réacteur de combustion appelé "réacteur Fuel" (R0). Après réaction, dans la zone de réduction R0, le matériau transporteur d'oxygène, sous forme d'un flux de particules solides (1) est acheminé vers la zone réactive R1 décrite par la présente invention, par exemple par transport pneumatique, ou par transport en phase dense dans des canalisations, le transport des particules étant contrôlé par des vannes non mécaniques par exemple du type des vannes en L, pour y être oxydé au contact de l'air par enrichissement de sa structure cristalline en atomes d'oxygène. C'est du fait de cette fonction d'oxydation au contact de l'air que la zone réactive R1 peut être qualifiée de zone d'oxydation ou "réacteur Air". Le flux de particules de matériau transporteur d'oxygène (1) est introduit par une conduite dans le réacteur air R1, dans lequel les particules de matériau transporteur d'oxygène sont réoxydées au contact d'un flux d'air (2) fourni généralement en surstoechiométrie en oxygène de l'ordre de 0 % à 20 %, préférentiellement de 5 à 15 %. La géométrie du réacteur est telle que la vitesse de la phase gazeuse dans les conditions de réactions dans cette zone varie préférentiellement entre 3 et 30 m/s, préférentiellement entre 5 et 15 m/s et le flux de solide transporteur d'oxygène transporté varie généralement entre 25 et 200 kg/s/m2, et est préférentiellement compris dans la gamme comprise entre 30 et 100 kg/s/m2 pour favoriser un bon contact entre les gaz et les particules d'oxyde métallique. Cette vitesse est suffisante pour assurer le transport pneumatique de particules de matériau transporteur d'oxygène considéré dans la présente invention qui appartiennent au groupe B de la classification de Geldart. Un réacteur dans une telle configuration peut alors être qualifié de «riser» réactif. Le temps de séjour des particules de solide est avantageusement compris entre 1 s et 1 min, préférentiellement entre 2 s et 20 s. Lors de la circulation du solide porteur d'oxygène dans la boucle chimique, celui-ci peut former des fines et ainsi être extrait partiellement avec les cendres. Pour maintenir l'inventaire de matériau transporteur d'oxygène constant dans l'unité, par exemple pour compenser la perte de solide par attrition, on peut avoir recours à un appoint (3) (facultatif) de particules de matériau transporteur d'oxygène introduit par une conduite d'appoint dans la zone réactive R1. La majorité des cendres agglomérées dites cendres de foyer telles que décrites précédemment se forme lors de la combustion de la charge hydrocarbure dans le réacteur Fuel où elles sont éliminées au cours de leur formation. Toutefois, si la configuration particulière de mise en oeuvre de l'invention devait faire que celles-ci se retrouvent présentes dans le flux (1), en mélange avec les particules de matériau transporteur d'oxygène elles peuvent être éliminées par écoulement gravitaire en fond de la zone réactive R1. Les cendres de lits ne sont généralement pas transportées pneumatiquement dans les conditions du procédé. Celles-ci se retrouvent en fond du réacteur R1 et peuvent en être extraites par une conduite (4) alimentant des moyens d'extraction qui peuvent être par exemple une vis sans fin refroidie.

La phase mélangée (5) issue de la zone réactive R1 et comprenant du gaz de fluidisation et des solides est transportée vers un dispositif de séparation gaz-solide S2 de type cyclone où elle est séparée en une phase gaz et une phase solide avec un seuil de coupure typiquement compris pour un cyclone entre 10 et 20 µm. Les cendres et les particules fines sont en partie entraînées avec le gaz, tandis que le flux solide comprenant le matériau porteur d'oxygène est envoyé vers la zone de séparation en phase dense S3. Plus particulièrement, il résulte de cette séparation deux effluents :
- une phase transportée majoritairement gazeuse (6) comportant avantageusement moins de 15 % des cendres issues de la phase transportée gaz-solide (5) et moins de 1% des oxydes métalliques issus de la phase transportée gaz-solide (5).
- un écoulement solide (7) riche en matériau transporteur d'oxygène comportant avantageusement plus de 85% des cendres issues de la phase transportée gaz-solide (5) et plus de 99 % des oxydes métalliques issus de la phase transportée gaz-solide (5), ledit écoulement solide alimentant la zone de séparation S3.

La zone de séparation par élutriation en phase dense S3 peut prendre la forme d'un lit fluidisé dense dont la fonction principale selon la présente invention est de séparer les cendres volantes des particules de matériau transporteur d'oxygène. Le réacteur est fluidisé par un gaz de fluidisation (8) choisi parmi ceux qui ne risquent pas de diminuer le degré d'oxydation du matériau transporteur d'oxygène, préférentiellement de la vapeur, de l'azote ou même de l'air, ce dernier étant susceptible de participer à augmenter le degré d'oxydation du solide. Les gaz potentiellement réducteurs tels que les hydrocarbures légers, le monoxyde de carbone ou l'hydrogène sont à éviter. La séparation proprement dite est réalisée par une élutriation en phase dense : la vitesse de la phase gaz dans la zone de séparation en phase dense S3 est adaptée de telle façon que les particules de matériau transporteur d'oxygène, plus grosses et denses que les cendres, demeurent dans le lit fluidisé, tandis que les cendres volantes, moins denses et plus petites que les particules de matériau transporteur d'oxygène, soient entraînées avec la phase gaz par transport pneumatique. De manière générale, la vitesse du gaz est comprise entre 0,3 et 1,5 m/s, préférentiellement dans le domaine 0,4 et 1m/s pour atteindre des valeurs de flux de particules entrainées variant entre 0,01 et 5 kg/s/m2, préférentiellement comprises entre 0,05 et 0,5 kg/s/m2. Il en résulte deux effluents, un effluent gazeux (9) comportant un mélange de particules riche en cendres volantes contenant moins de 30 % en poids de particules de transporteur d'oxygène et préférentiellement moins de 15 % en poids de particules de transporteur d'oxygène, et un écoulement solide (10) riche en particules de matériau transporteur d'oxygène, comportant moins de 5% en poids de cendres et préférentiellement moins de 1% en poids de cendres.

De façon optionnelle, on peut diriger un flux (11) de solide depuis la zone de séparation par élutriation en phase dense S3 vers la zone réactive d'oxydation R1. Ce recyclage a pour effet :
- de faire effectuer une boucle au matériau transporteur d'oxygène dans la zone réactive d'oxydation pour en maximiser le degré d'oxydation,
- mais aussi de faire circuler de nouveau les cendres restant mélangées au matériau transporteur d'oxygène au travers des zones de séparation gaz-solide S2 et par élutriation en phase dense S3.

De façon facultative, on peut implanter un échangeur de chaleur E4 au sein de la phase fluidisée dense constituée au bas de la zone de séparation S3 par l'accumulation des particules de transporteur d'oxygène. Un fluide caloporteur (12) circule dans l'échangeur E4 soit en écoulement purement monophasique (gaz ou liquide) soit, si l'on souhaite générer de la vapeur et maximiser l'échange de chaleur, sous forme vaporisée en tout ou partie.

Dans la zone de séparation par élutriation en phase dense S3, le lit fluidisé en phase dense a ainsi avantageusement une fonction secondaire telle que le contrôle de la circulation du porteur d'oxygène autour du réacteur air, et/ou un complément d'oxydation du porteur d'oxygène si le gaz choisi pour le fluidiser est oxydant et/ou une fonction de récupération de chaleur.

De manière avantageuse, on peut compléter la séparation effectuée dans la zone de séparation en phase dense S3 en implantant en aval de la zone S3 une zone de dépoussiérage des fumées sous la forme d'un séparateur gaz-solide S5, par exemple un cyclone. Dans ce mode de réalisation, l'effluent gazeux riche en cendres volantes (9) comportant avantageusement moins de 30 % en poids de particules de transporteur d'oxygène et préférentiellement moins de 15 % en poids de particules de transporteur d'oxygène, issu de la zone de séparation par élutriation en phase dense S3, est envoyé vers la zone de dépoussiérage S5. Il en résulte un flux transporté gazeux (13) comprenant majoritairement des cendres volantes et des fines et un flux solide (14) comprenant la majeure partie des particules de matériau transporteur d'oxygène de l'effluent gazeux (9) qui est envoyé vers la zone de réduction R0 de la boucle chimique. Le flux de solide (14) peut être joint au flux de solide (10) issu de la zone de séparation en phase dense S3, dans une conduite d'alimentation commune de la zone de réduction R0.

De préférence, le matériau transporteur d'oxygène (le plus souvent un oxyde métallique) injecté dans l'installation contient initialement moins de 10% de particules de diamètre inférieur à 100 microns ce qui permet une séparation aisée des cendres et de l'oxyde métallique par élutriation.

### Exemple

L'exemple se rapporte à la figure 1, sans le recyclage facultatif du flux (11) ni la récupération de chaleur E4, dans le mode de réalisation préféré où l'on a recours à une zone de dépoussiérage des fumées S5, ici un cyclone.

On considère ici une boucle chimique dans laquelle circule un oxyde métallique porteur d'oxygène d'une puissance thermique brute de l'ordre de 300 MWth soit une circulation de solide équivalente à 1077 kg/s.

On considère la combustion d'un charbon contenant 14 % de cendres alimentant l'unité à raison de 11,6 kg/s. Le charbon est alimenté dans le réacteur fuel avec une granulométrie caractérisée par le fait que moins de 2 % du charbon a une taille de particules supérieure à 200 microns.

Le porteur d'oxygène utilisé est un solide choisi de type Illménite d'une densité proche de 5 000 kg/m3.

Le présent exemple traite de l'élimination des cendres en sortie du réacteur air selon la présente invention de telle façon que les cendres éliminées soient équivalentes en flux massique au flux de cendres entrant dans l'unité (correspondant aux cendres de la charge introduite en continu), soit un flux de cendres à éliminer de 1,62 kg/s. Par hypothèse, les cendres sont uniquement éliminées au niveau de la zone de séparation par élutriation en phase dense S3 telle que décrite dans la figure 1 après passage dans un cyclone S2.

Les populations granulométriques des cendres et du matériau transporteur d'oxygène sont présentées dans le tableau suivant :

**Tableau 2 : Granulométrie des différentes particules circulant dans l'installation**

| Granulométrie des différentes particules circulant dans l'installation | | | |
|---|---|---|---|
| dpmin µm | dpmax µm | Oxyde % poids | Cendres % poids |
| 0 | 5 | 0,00 | 10,80 |
| 5 | 10 | 0,00 | 15,74 |
| 10 | 15 | 0,00 | 12,16 |
| 15 | 20 | 0,00 | 9,78 |
| 20 | 25 | 0,00 | 8,01 |
| 25 | 30 | 0,00 | 6,63 |
| 30 | 35 | 0,00 | 5,53 |
| 35 | 40 | 0,00 | 4,64 |
| 40 | 45 | 0,00 | 3,91 |
| 45 | 50 | 0,00 | 3,30 |
| 50 | 60 | 0,00 | 4,03 |
| 60 | 70 | 0,02 | 4,06 |
| 70 | 80 | 0,13 | 2,96 |
| 80 | 90 | 0,50 | 2,17 |
| 90 | 100 | 1,35 | 1,60 |
| 100 | 125 | 6,07 | 1,86 |
| 125 | 150 | 18,53 | 1,44 |
| 150 | 175 | 24,22 | 0,70 |
| 175 | 200 | 20,87 | 0,35 |
| 200 | 250 | 18,25 | 0,22 |
| 250 | 300 | 8,06 | 0,09 |
| 300 | 350 | 1,65 | 0,02 |
| 350 | 400 | 0,29 | 0,01 |
| 400 | 450 | 0,05 | 0,00 |
| 450 | 500 | 0,01 | 0,00 |
| 500 | 750 | 0,00 | 0,00 |
| 750 | 1000 | 0,00 | 0,00 |

Les propriétés de particules et les vitesses terminales de chute (Ut en m/s) en fonction du diamètre moyen de particule (dp en µm) pour les cendres et le matériau transporteur d'oxygène sont données dans le tableau 3 ci-dessous.

| | Cendres | MTO |
|---|---|---|
| ρg | 0,36 | 0,36 |
| ρp | 2500 | 5000 |
| µg | 0,000048 | 0,000048 |

| dp µm | Ut | Ut |
|---|---|---|
| 10 | 3,00E-03 | |
| 25 | 1,70E-03 | |
| 50 | 6,90E-03 | 0,138 |
| 75 | 0,155 | 0,31 |
| 100 | 0,276 | 0,54 |
| 150 | 0,589 | 1,08 |
| 200 | 0,94 | 1,67 |

Avec ρg la masse volumique du gaz en kg/m3, pp la masse volumique des solides en kg/m3 et µg la viscosité du gaz en Pa.s.

La phase transportée issue de la zone d'oxydation R1 est dirigée dans un flux (5) vers le cyclone S2. Celui-ci a une efficacité de récupération de solide telle que :
- 95 % en masse des cendres issues du flux (5) se retrouvent dans le flux solide (7)
- 99,98 % en masse des oxydes métalliques issus du flux (5) se retrouvent dans le flux solide (7).

Le flux (7) est dirigé vers le séparateur en lit fluidisé dense S3 avec une vitesse du gaz vecteur (8) de 0,75 m/s. Dans ce réacteur, on a un entraînement de 50% des cendres et de 20% de la population des fines d'oxyde métallique. Il en résulte un flux gazeux entraîné (9) comportant 5,3% en masse du flux d'oxyde métallique provenant du flux solide (7) et 47 % en masse du flux des cendres issues du flux solide (7).

Ce flux (9) est ensuite dirigé vers un cyclone S5. Celui-ci a une efficacité de récupération de solide telle que :
- 91 % en masse des cendres issues de la phase transportée (5) se retrouvent dans le flux (14)
- et 99.8 % en masse des oxydes métalliques issus de la phase transportée (5) se retrouvent dans le flux (14).

Il en résulte une élimination des cendres équivalente à 9,1% du flux massique initial de cendres et une élimination des fines d'oxyde métallique à hauteur de 0,02% du flux massique initial.

Cette capacité à éliminer les cendres permet de limiter le taux de cendres présentes dans le lit. Ainsi à la puissance choisie le dispositif doit éliminer 1,67 kg/s de cendres, ce qui correspond à un flux massique de cendres dans le flux (5) de 18,3 kg/s, soit 1,7 % massique du flux total de matériau transporteur d'oxygène et cendres (5). Pour le flux de matériau transporteur d'oxygène, cela se traduit par une élimination des fines à hauteur de 0,17 kg/s de MTO pour le flux (11) qui s'ajoutent aux 1,67 kg/s de cendres éliminées.

En conclusion, on obtient un flux (13) riche en cendres, à hauteur de 90,7 % et le taux de cendres dans le lit circulant est maintenu à 1,7 % en masse.

## Revendications

1. Procédé de combustion d'une charge hydrocarbonée de particules solides en boucle chimique dans laquelle circule un matériau transporteur d'oxygène sous forme de particules, dans lequel :
- on met en contact des particules de charge hydrocarbonée avec les particules de matériau transporteur d'oxygène dans une zone de réduction R0 ;
- on met en contact les particules de matériau transporteur d'oxygène (1) issues de la zone de réduction R0 avec un flux de gaz oxydant (2) dans une zone réactive d'oxydation R1 ;
- on envoie la phase transportée (5) issue de la zone réactive R1 comprenant du gaz et du solide vers une zone de séparation gaz-solide S2 afin de séparer : une phase transportée majoritairement gazeuse (6) comprenant des cendres volantes et des fines de matériau transporteur d'oxygène, et un flux solide (7) comprenant la majeure partie des fines, des cendres volantes et la majeure partie des particules de matériau transporteur d'oxygène ;
- **caractérisé en ce qu'** on envoie le flux solide (7) issu de la zone de séparation gaz-solide S2 vers une zone de séparation par élutriation en phase dense S3 fluidisée par un gaz non réducteur (8) permettant de séparer les fines et cendres volantes des particules de matériau transporteur d'oxygène afin d'envoyer un flux de particules (10) comprenant la majeure partie des particules de transporteur d'oxygène vers la zone de réduction R0, et évacuer par une conduite de sortie un effluent majoritairement gazeux (9) comprenant la majeure partie des cendres volantes et des fines de matériau transporteur d'oxygène.

2. Procédé selon la revendication 1 dans lequel on fait circuler en boucle dans la zone réactive R1 les particules de transporteur d'oxygène au moyen d'une conduite (11) permettant le recyclage des particules de transporteur d'oxygène sédimentées dans la phase fluidisée dense depuis le fond de la zone de séparation S3 vers le bas de la zone réactive R1.

3. Procédé selon l'une des revendications 1 ou 2 dans lequel on récupère de la chaleur au sein de la phase fluidisée dense constituée en fond de la zone de séparation par élutriation en phase dense S3 au moyen d'un échangeur de chaleur E4.

4. Procédé selon l'une des revendications 1 à 3 dans lequel la zone de séparation par élutriation en phase dense S3 est fluidisée avec une vitesse de fluidisation comprise entre 0,5 et 1 m/s.

5. Procédé selon l'une des revendications précédentes dans lequel les particules de matériau transporteur d'oxygène comprennent initialement moins de 10% de particules de diamètre inférieur à 100 microns.

6. Procédé selon l'une des revendications précédentes dans lequel :
- on envoie l'effluent majoritairement gazeux (9) issu de la zone de séparation par élutriation en phase dense S3 vers une zone de dépoussiérage S5 pour évacuer un flux de gaz (13) contenant la majeure partie des cendres et des fines et un flux de particules (14) comprenant la majeure partie du matériau transporteur d'oxygène, ledit flux de particules étant envoyé par une conduite de transport vers la zone de réduction R0.

7. Installation pour réaliser la combustion d'une charge hydrocarbonée solide dans une boucle chimique d'oxydo-réduction selon le procédé selon l'une des revendications 1 à 6, ladite installation comprenant au moins:
- une zone de réduction R0 ;
- une zone réactive d'oxydation R1 munie d'une alimentation en particules de transporteur d'oxygène (1) issues de la zone de réduction R0, d'une alimentation en gaz de fluidisation oxydant (2), et d'une conduite de sortie pour évacuer une phase transportée (5) comprenant du gaz et des particules solides ;
- une zone de séparation gaz-solide S2 située en aval de la zone réactive R1, alimentée par ladite conduite de sortie et comprenant une conduite d'évacuation d'une phase transportée majoritairement gazeuse (6) et une conduite d'évacuation d'un flux solide (7) comprenant la majeure partie du matériau transporteur d'oxygène ;
- une zone de séparation par élutriation en phase dense S3 située en aval de la zone de séparation gaz-solide S2 comprenant une admission dudit flux solide (7), une conduite permettant l'introduction d'un gaz de fluidisation (8), une conduite de transport vers la zone de réduction R0 d'un flux de particules solides (10) riche en particules de transporteur d'oxygène, et une conduite d'évacuation d'un flux de gaz riche en cendres volantes (9),
**caractérisé en ce que** la phase fluidisée dense de ladite zone de séparation par élutriation en phase dense S3 est configurée pour que la vitesse du gaz de la phase gaz dans ladite zone de séparation en phase dense S3 soit adaptée de telle façon que les particules du matériau transporteur d'oxygène, plus grosses et denses que les cendres volantes, demeurent dans le lit fluidisé, tandis que les cendres volantes, moins denses et plus petites que les particules du matériau transporteur d'oxygène, soient entraînées avec la phase gaz par transport pneumatique.

8. Installation selon la revendication 7 comprenant un échangeur de chaleur E4 au sein de la phase fluidisée dense constituée au bas de la zone de séparation en phase dense S3.

9. Installation selon l'une des revendications 7 à 8 comprenant une conduite issue de la zone de séparation en phase dense S3 pour recycler vers la zone réactive R1 un flux de particules (11) comprenant une partie des particules solides séparées dans la zone de séparation par élutriation en phase dense S3.

10. Installation selon l'une des revendications 7 à 9 comprenant une zone de dépoussiérage S5 en aval de la zone de séparation par élutriation en phase dense S3, munie d'une conduite d'admission pour recevoir un effluent majoritairement gazeux (9) issue de la zone de séparation S3, d'une conduite de sortie permettant d'évacuer un flux de gaz (13) contenant la majeure partie des cendres et des fines, et d'une conduite de transport vers la zone de réduction R0 d'un flux de particules (14) comprenant la majeure partie du matériau transporteur d'oxygène.

## Patentansprüche

1. Verfahren zur Chemical Looping-Verbrennung einer Kohlenwasserstofffraktion fester Partikel, wobei ein Sauerstoff transportierendes Material in der Form von Partikeln zirkuliert wird, wobei:
- Partikel der Kohlenwasserstofffraktion mit den Partikeln des Sauerstoff transportierenden Materials in einer Reduktionszone R0 in Kontakt gebracht werden;
- die Partikel des Sauerstoff transportierenden Materials (1) aus der Reduktionszone R0 mit einem Strom eines Oxidationsgases (2) in einer reaktiven Oxidationszone R1 in Kontakt gebracht werden;
- die transportierte Phase (5) aus der reaktiven Zone R1, umfassend Gas und Feststoff, zu einer Gas-Feststoff-Trennzone S2 geschickt wird, um zu trennen: eine mehrheitlich gasförmige transportierte Phase (6), umfassend Flugasche und Feinstoffe des Sauerstoff transportierenden Materials, und einen festen Strom (7), umfassend den Großteil der Feinstoffe, der Flugasche und den Großteil der Partikel des Sauerstoff transportierenden Materials;
**dadurch gekennzeichnet, dass**
- der feste Strom (7) aus der Gas-Feststoff-Trennzone S2 zu einer Trennzone durch Elutriation in dichter Phase S3, fluidisiert durch ein Nicht-Reduktionsgas (8), geschickt wird, wodurch es ermöglicht wird, die Feinstoffe und die Flugasche von den Partikeln des Sauerstoff transportierenden Materials zu trennen, um einen Partikelstrom (10), umfassend den Großteil der Partikel des Sauerstoff transportierenden Materials, zur Reduktionszone R0 zu schicken, und durch eine Austrittsleitung einen mehrheitlich gasförmigen Abstrom (9), umfassend den Großteil der Flugasche und der Feinstoffe des Sauerstoff transportierenden Materials, abzuziehen.

2. Verfahren nach Anspruch 1, wobei in der reaktiven Zone R1 die Partikel des Sauerstoff transportierenden Materials mittels einer Leitung (11) in einer Schleife zirkuliert werden, wodurch es ermöglicht wird, dass die Partikel des Sauerstoff transportierenden Materials, die in der dichten fluidisierten Phase sedimentiert haben, vom Boden der Trennzone S3 zur Unterseite der reaktiven Zone R1 rückgeführt werden.

3. Verfahren nach einem der Ansprüche 1 oder 2, wobei die Wärme im Inneren der dichten fluidisierten Phase, die am Boden der Trennzone durch Elutriation in dichter Phase S3 gebildet wird, mittels eines Wärmetauschers E4 abgeführt wird.

4. Verfahren nach einem der Ansprüche 1 bis 3, wobei die Trennzone durch Elutriation in dichter Phase S3 mit einer Fluidisierungsgeschwindigkeit zwischen 0,5 und 1 m/s fluidisiert wird.

5. Verfahren nach einem der vorhergehenden Ansprüche, wobei die Partikel des Sauerstoff transportierenden Materials anfänglich weniger als 10 % Partikel mit einem Durchmesser kleiner als 100 Mikron umfassen.

6. Verfahren nach einem der vorhergehenden Ansprüche, wobei:
- der mehrheitlich gasförmige Abstrom (9) aus der Trennzone durch Elutriation in dichter Phase S3 zu einer Entstaubungszone S5 geschickt wird, um einen Gasstrom (13), enthaltend den Großteil der Asche und der Feinstoffe, und einen Partikelstrom (14), umfassend den Großteil des Sauerstoff transportierenden Materials, abzuziehen, wobei der Partikelstrom durch eine Transportleitung zu der Reduktionszone R0 geschickt wird.

7. Anlage zur Durchführung der Chemical Looping-Redox-Verbrennung einer festen Kohlenwasserstofffraktion gemäß dem Verfahren nach einem der Ansprüche 1 bis 6, wobei die Anlage mindestens umfasst:
- eine Reduktionszone R0;
- eine reaktive Oxidationszone R1, die mit einer Zufuhr Sauerstoff transportierender Partikel (1) aus der Reduktionszone R0, mit einer Zufuhr von Fluidisierungsoxidationsgas (2) und einer Austrittsleitung versehen ist, um eine transportierte Phase (5) abzuziehen, umfassend Gas und feste Partikel;
- eine Gas-Feststoff-Trennzone S2, die stromabwärts von der reaktiven Zone R1 angeordnet ist, und die von der Austrittsleitung gespeist wird, und umfassend eine Abzugsleitung einer mehrheitlich gasförmigen transportierten Phase (6) und eine Abzugsleitung eines festen Stroms (7), umfassend den Großteil des Sauerstoff transportierenden Materials;
- eine Trennzone durch Elutriation in dichter Phase S3, die stromabwärts von der Gas-Feststoff-Trennzone S2 angeordnet ist, umfassend eine Aufnahme des festen Stroms (7), eine Leitung, die das Einbringen eines Fludisierungsgases (8) gestattet, eine Transportleitung eines Stroms fester Partikel (10) reich an Sauerstoff transportierenden Partikeln zur Reduktionszone R0, und eine Abzugsleitung eines Gasstroms reich an Flugasche (9),
**dadurch gekennzeichnet, dass** die dichte fluidisierte Phase der Trennzone durch Elutriation in dichter Phase S3 ausgelegt ist, dass die Geschwindigkeit des Gases der Gasphase in der Trennzone in dichter Phase S3 derart angepasst wird, dass die Partikel des Sauerstoff transportierenden Materials, die größer und dichter sind als die Flugasche, im Fließbett verbleiben, während die Flugasche, die weniger dicht und kleiner ist als die Partikel des Sauerstoff transportierenden Materials, mit der Gasphase durch einen pneumatischen Transport mitgeführt wird.

8. Anlage nach Anspruch 7, umfassend einen Wärmetauscher E4 im Inneren der dichten fluidisierten Phase, die an der Unterseite der Trennzone in dichter Phase S3 gebildet wird.

9. Anlage nach einem der Ansprüche 7 bis 8, umfassend eine Leitung aus der Trennzone in dichter Phase S3, um zur reaktiven Zone R1 einen Partikelstrom (11) zurückzuführen, umfassend einen Teil der festen Partikel, die in der Trennzone durch Elutriation in dichter Phase S3 getrennt werden.

10. Anlage nach einem der Ansprüche 7 bis 9, umfassend eine Entstaubungszone S5 stromabwärts von der Trennzone durch Elutriation in dichter Phase S3, die versehen ist mit einer Aufnahmeleitung, um einen mehrheitlich gasförmigen Abstrom (9) aus der Trennzone S3 aufzunehmen, einer Austrittsleitung, die es ermöglicht, einen Gasstrom (13), enthaltend den Großteil der Asche und der Feinstoffe, abzuziehen, und einer Transportleitung eines Partikelstroms (14), umfassend den Großteil des Sauerstoff transportierenden Materials, zur Reduktionszone R0.

## Claims

1. A method for chemical-looping combustion of a hydrocarbon feedstock of solid particles, wherein an oxygen-carrying material circulates in form of particles, comprising:
- contacting hydrocarbon feedstock particles with the oxygen-carrying material particles in a reduction zone R0,
- contacting oxygen-carrying material particles (1) from reduction zone R0 with an oxidizing gas stream (2) in a reactive oxidation zone R1,
- sending transported phase (5) from reactive zone R1 comprising gas and solid to a gas-solid separation zone S2 so as to separate: a predominantly gaseous transported phase (6) comprising fly ashes and oxygen-carrying material fines, and a solid stream (7) comprising the major part of the fines, the fly ashes and the major part of the oxygen-carrying material particles, **characterized in that** the method comprises :
- sending solid stream (7) from gas-solid separation zone S2 to a dense phase elutriation separation zone S3 fluidized by a non-reducing gas (8) allowing to separate the fines and the fly ashes from the oxygen-carrying material particles so as to send a particle stream (10) comprising the major part of the oxygen carrier particles to reduction zone R0, and to discharge through a discharge line a predominantly gaseous effluent (9) comprising the major part of the fly ashes and of the oxygen-carrying material fines.

2. A method as claimed in claim 1, wherein the oxygen-carrying particles are circulated in a loop in reactive zone R1 by means of a line (11) allowing to recycle the oxygen-carrying particles sedimented in the dense fluidized phase from the bottom of separation zone S3 to the lower part of reactive zone R1.

3. A method as claimed in any one of claims 1 or 2, wherein heat is recovered in the dense fluidized phase formed in the bottom of dense phase elutriation separation zone S3 by means of a heat exchanger E4.

4. A method as claimed in any one of claims 1 to 3, wherein dense phase elutriation separation zone S3 is fluidized with a fluidization rate ranging between 0.5 and 1 m/s.

5. A method as claimed in any one of the previous claims, wherein the oxygen-carrying material particles initially comprise less than 10 % particles of diameter below 100 microns.

6. A method as claimed in any one of the previous claims, wherein:
- the predominantly gaseous effluent (9) from dense phase elutriation separation zone S3 is sent to a dedusting zone S5 in order to discharge a gas stream (13) containing the major part of the ashes and of the fines and a particle stream (14) comprising the major part of the oxygen-carrying material, said particle stream being sent through a transport line to reduction zone R0.

7. A plant for carrying out chemical-looping redox combustion of a solid hydrocarbon feedstock according to the method as claimed in any one of claims 1 to 6, said plant comprising at least:
- a reduction zone R0,
- a reactive oxidation zone R1 provided with feed means supplying oxygen-carrying particles (1) coming from reduction zone R0, feed means supplying oxidizing fluidization gas (2), and a discharge line for discharging a transported phase (5) comprising gas and solid particles,
- a gas-solid separation zone S2 arranged downstream from reactive zone R1, supplied by said discharge line and comprising a line for discharging a predominantly gaseous transported phase (6) and a discharge line for discharging a solid stream (7) comprising the major part of the oxygen-carrying material,
- a dense phase elutriation separation zone S3 arranged downstream from gas-solid separation zone S2, comprising an intake for said solid stream (7), a line allowing a fluidization gas (8) to be supplied, a line for carrying to reduction zone R0 a solid particle stream (10) rich in oxygen-carrying particles, and a line for discharging a gas stream rich in fly ashes (9),
**characterized in that** the dense phase of said dense phase elutriation separation zone S3 is configured such that the gas velocity of the gas phase in said dense phase elutriation separation zone S3 is adjusted in such a way that the oxygen-carrying particles, bigger and denser than the ashes, remain in the fluidized bed, and the fly ashes, less dense and smaller than the oxygen-carrying particles, are carried along with the gas phase through pneumatic transport.

8. A plant as claimed in claim 7, comprising a heat exchanger E4 in the dense fluidized phase formed in the bottom of dense phase separation zone S3.

9. A plant as claimed in any one of claims 7 to 8, comprising a line coming from dense phase separation zone S3 for recycling to reactive zone R1 a particle stream (11) comprising part of the solid particles separated in dense phase elutriation separation zone S3.

10. A plant as claimed in any one of claims 7 to 9, comprising a dedusting zone S5 downstream from dense phase elutriation separation zone S3, provided with an intake line for receiving a predominantly gaseous effluent (9) coming from separation zone S3, a discharge line allowing to discharge a gas stream (13) containing the major part of the ashes and the fines, and a transport line for carrying to reduction zone R0 a particle stream (14) comprising the major part of the oxygen-carrying material.
